(19) Europäisches Patentamt
European Patent Office
Office européen des brevets

(11) **EP 1 554 548 B1**

(12) **EUROPÄISCHE PATENTSCHRIFT**

(45) Veröffentlichungstag und Bekanntmachung des Hinweises auf die Patenterteilung:
**22.05.2019 Patentblatt 2019/21**

(21) Anmeldenummer: **03755916.8**

(22) Anmeldetag: **31.05.2003**

(51) Int Cl.:
*G01F 1/66* (2006.01)    *G01F 1/74* (2006.01)
*G01N 29/02* (2006.01)    *G01N 29/024* (2006.01)
*G01F 1/00* (2006.01)    *G01N 29/11* (2006.01)
*G01N 29/22* (2006.01)    *G01N 29/34* (2006.01)

(86) Internationale Anmeldenummer:
**PCT/DE2003/001783**

(87) Internationale Veröffentlichungsnummer:
**WO 2003/102512 (11.12.2003 Gazette 2003/50)**

(54) **ULTRASCHALL-LAUFZEIT-MENGENMESSUNG ZUM ERMITTELN DER KONZENTRATION VON PARTIKELN IN EINEM STRÖMENDEN FLUID**

ULTRASONIC MEASUREMENT OF THE RUNNING TIME AND QUANTITY FOR DETECTING THE CONCENTRATION OF PARTICLES IN A FLOWING FLUID

MESURE DU DEBIT A L'AIDE DU TEMPS DE PARCOURS DES ULTRASONS PERMETTANT DE DETERMINER LA CONCENTRATION DE PARTICULES DANS UN FLUIDE EN ECOULEMENT

(84) Benannte Vertragsstaaten:
**AT BE BG CH CY CZ DE DK EE ES FI FR GB GR HU IE IT LI LU MC NL PT RO SE SI SK TR**

(30) Priorität: **31.05.2002 DE 10224294**

(43) Veröffentlichungstag der Anmeldung:
**20.07.2005 Patentblatt 2005/29**

(73) Patentinhaber: **systec Controls Mess- und Regeltechnik GmbH**
**82178 Puchheim (DE)**

(72) Erfinder: **BETZ, Oliver**
**82194 Gröbenzell (DE)**

(74) Vertreter: **Braun-Dullaeus, Karl-Ulrich et al**
**Braun-Dullaeus Pannen Emmerling**
**Patent- und Rechtsanwaltspartnerschaft mbB**
**Platz der Ideen 2**
**40476 Düsseldorf (DE)**

(56) Entgegenhaltungen:
**GB-A- 2 156 075      US-A- 3 575 050**
**US-A- 3 731 532      US-A- 4 718 269**
**US-A- 5 125 514      US-A- 5 533 408**

- **PATENT ABSTRACTS OF JAPAN vol. 2000, no. 14, 5. März 2001 (2001-03-05) -& JP 2000 321104 A (MATSUSHITA ELECTRIC IND CO LTD), 24. November 2000 (2000-11-24)**
- **PATENT ABSTRACTS OF JAPAN vol. 011, no. 153 (P-577), 19. Mai 1987 (1987-05-19) & JP 61 288185 A (OMRON TATEISI ELECTRONICS CO), 18. Dezember 1986 (1986-12-18)**

## Beschreibung

Die Erfindung betrifft ein Verfahren zur Ultraschall-Laufzeit-Mengenmessung eines strömenden Fluids, bei dem die Laufzeit eines Ultraschall-Signals entgegen und mit der Strömung gemessen und daraus die Strömungsgeschwindigkeit des Fluids ermittelt wird.

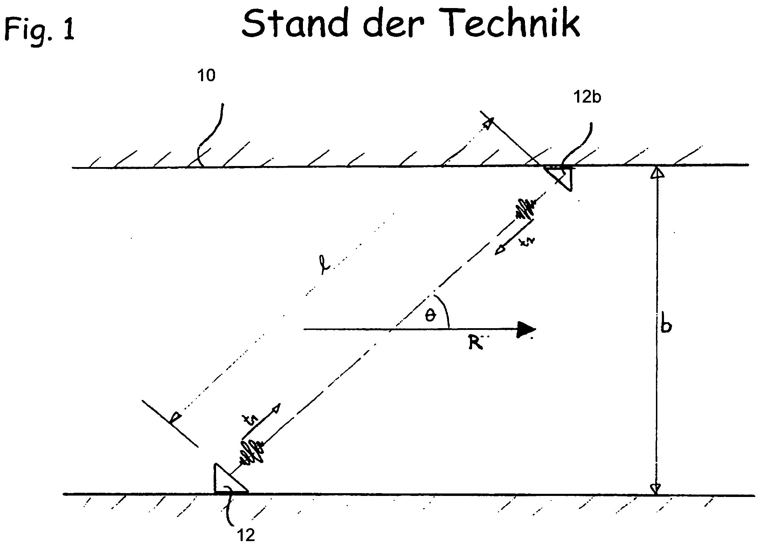

Das Ultraschall-Laufzeitverfahren ist eine bekannte und bewährte Methode zu Ermittlung der Strömungsgeschwindigkeit von Fluiden, also flüssigen oder gasförmigen Medien in Leitungen oder Kanälen. Bei einem Ultraschall-Laufzeitverfahren nach dem Stand der Technik (Fig. 1) werden in einem durchströmten Meßquerschnitt 10 mindestens zwei Ultraschall-Wandler 12a, 12b zur Strömungsrichtung R versetzt angeordnet. Der Abstand 1 zwischen den beiden Ultraschall-Wandlern 12a, 12b ist daher größer als die Weite b des durchströmten Meßquerschnitts. Die Ultraschall-Wandler 12a, 12b können hierbei sowohl mediumsbenetzt als auch von außen auf die Wand des Meßquerschnitts 10 aufgesetzt sein. Durch die Eigengeschwindigkeit des Mediums benötigen Ultraschallsignale, die mit der Strömung diagonal stromabwärts gesendet werden, einen geringere Laufzeit $t_1$ als Ultraschallsignale die stromaufwärts gesendet werden (Laufzeit $t_2$). Sind der Abstand zwischen den Ultraschall-Wandlern sowie der Winkel $\theta$ zwischen Ultraschallpfad und Strömungsrichtung bekannt, so läßt sich die mittlere Strömungsgeschwindigkeit aus der Laufzeitdifferenz dt = $t_2$-$t_1$ ermitteln:

$$v = \frac{l}{2\cos\theta} \cdot \frac{dt}{t_1 \cdot t_2}$$

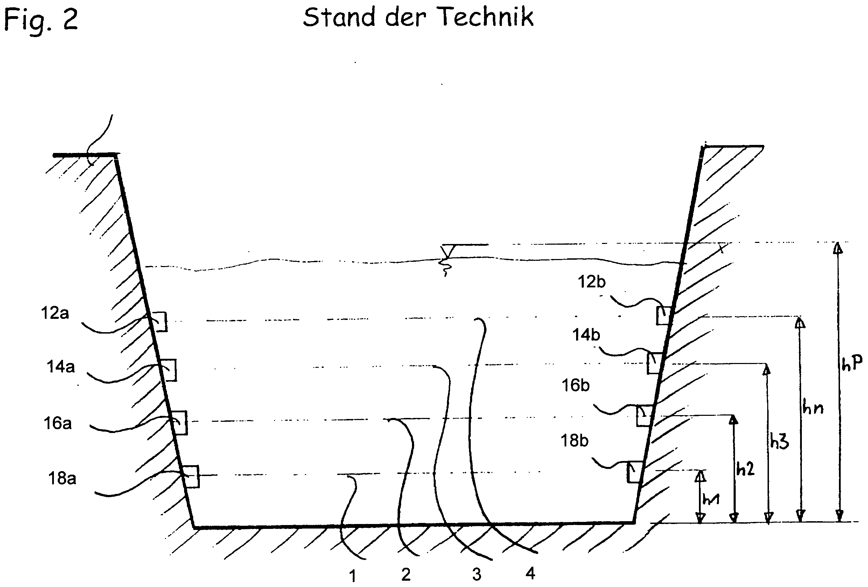

Zur Ermittlung der Laufzeitdifferenz werden in modernen Messeinrichtungen die empfangenen Signale digitalisiert und dann mit einem Auswerterechner (Digital Signal Processor, DSP) ausgewertet. Zur Durchflussmessung in großen Querschnitten und zur Durchflussmessung bei Freispiegelquerschnitten werden wegen der komplexen Strömungsgegebenheiten Mehrpfad-Ultraschall-Durchflussmessungen verwendet. Fig. 2 zeigt beispielhaft eine solche Durchflussmessung in einem Meßquerschnitt 10 in Form eines offenen Gerinnes, in dem ein Fluid 20 mit einem Pegelstand $h_P$ fließt. In diesem

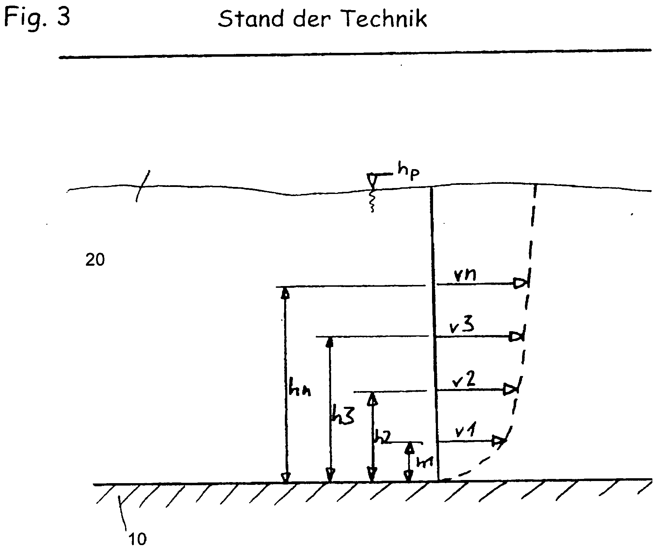

Beispiel sind zwischen paarweise angeordneten Ultraschall-Wandlern 12a, 12b, 14a, 14b, 16a, 16b, 18a, 18b horizontale Messpfade 1 bis n so übereinander angeordnet, dass die ungleiche Geschwindigkeitsverteilung $v_1$ bis $v_n$ über der Pegelhöhe $h_1$ bis $h_n$ (Fig. 3) ermittelt werden kann. Durch eine geeignete Integration lässt sich damit die mittlere Strömungsgeschwindigkeit im Querschnitt mit hoher Genauigkeit errechnen. Solche Messverfahren sind z.B. in der ISO/DIS 6416 beschrieben.

Bei einer Vielzahl von Applikationen bei denen Ultraschalldurchflussmesser zu Einsatz kommen, wäre neben der Durchflussmengenmessung auch die Messung der Partikeldichte oder Trübung von hohem Interesse. Als Beispiele seien hier die Messung von Rauch- und Abgasen, die Messung von Luftmengenströmen zur Verbrennungsregelung, die Messung hinter Filtern und die Messung von Zu- und Abläufen in Kläranlagen genannt. In den genannten Beispielen ist die Partikelmessung teilweise vorgeschrieben um z.B. Umweltauflagen zu erfüllen und/oder sie ist ein wichtiger Parameter um die Prozesse optimal zu überwachen oder zu steuern.

Es sind Verfahren zur Messung der Partikelkonzentration nach optischen Prinzipien bekannt. Dabei wird die Schwächung eines Lichtstrahls durch Streuung und Absorption zur Berechnung der Partikelkonzentration im Fluid benutzt. Diese Verfahren überwachen jedoch ein sehr geringes Kontrollvolumen welches als repräsentativ für den gesamten Meßquerschnitt angenommen wird. Darüber hinaus liefern diese Verfahren keinen ortsaufgelösten Meßwert. Ein weiterer Nachteil ist, daß diese Verfahren verschmutzungsanfällig und dadurch wartungsintensiv sind, beispielsweise wegen Algenbildung oder Ablagerungen von Schwebstoffen an den Lichtquellen oder Sensoren.

Aus dem DE 197 40 549 A1 ist eine ortsaufgelöste Geschwindigkeitsmessung in einem Fluid mittels des Tracking-Verfahrens bzw. des Multi-Gate-Verfahrens bekannt. Wenn Schlupf vorliegt, also wenn die Geschwindigkeit von in dem Fluid enthaltenen Inhomogenitätennicht mit der des Trägermediums übereinstimmt, kann durch eine unabhängig vom Tracking-Verfahren erfolgende Laufzeitdifferenz-Messung eine separate Erfassung der Massenströme des Trägermediums und der Inhomogenitäten erfolgen.

Das JP 2000 321104 A offenbart eine Ultraschall-Messvorrichtung, bei der eine durch Resonanzen mit vorhergehenden Ultraschall-Signalen verursachte Verfälschung der Messergebnisse verhindert werden soll, indem die durch einen Nachhall der Wandler mögliche Resonanz eliminiert wird.

Weitere bekannte Ultraschall-Messverfahren sind in der US 3 731 532 A, in der GB 2 156 075 A, in der US 5 125 514 A, in der US 3 575 050 A oder in der US 5 533 408 A beschrieben.

Aufgabe der Erfindung ist es, ein Verfahren zur Durchfluss-Mengenmessung mit Ultraschall zu schaffen, das eine kostengünstige und zuverlässige Möglichkeit zur Messung der Partikelkonzentration bietet.

Zu diesem Zweck wird bei einem Verfahren der eingangs genannten Art zusätzlich die Reflexion des Ultraschall-Signals an Partikeln im Fluid erfasst um daraus die Konzentration der Partikel zu ermitteln. Zur Erzeugung des Ultraschall-Signals wird ein elektrisches Sendesignal verwendet, welches aus einem Anregungsteil und einem Dämpfungsteil besteht. Der Dämpfungsteil weist gegenüber dem Anregungsteil eine Phasenverschiebung auf, sodass er dem Nachschwingen des Ultraschall-Wandlers entgegenwirkt. Zur Erfassung der Reflexionen sind im Hinblick auf ein Verfahren zur Durchfluss-Mengenmessung keine zusätzlichen Ultraschall-Wandler notwendig. Das erfindungsgemäße Verfahren läßt sich daher kostengünstig mit einer bereits vorhandenen Meßanordnung zur Durchfluss-Mengenmessung durchführen. Gegenüber bekannten Verfahren zur Messung der Partikelkonzentration ist das erfindungsgemäße Verfahren zuverlässiger, da die Ultraschall-Wandler weniger anfällig gegen Verschmutzung sind als optische Sensoren.

Weitere Ausgestaltungen der Erfindung ergeben sich aus den Unteransprüchen.

Die Erfindung wird nachfolgend anhand bevorzugter Ausführungsformen ausführlich beschrieben. Dazu wird Bezug genommen auf die beigefügten Zeichnungen, in welchen zeigt:

Figur 1    eine schematische Ansicht einer Anordnung zur Durchführung eines Laufzeitverfahrens nach dem Stand der Technik;

Figur 2    einen Querschnitt durch die Anordnung aus Fig.1 entlang der Linie II - II in Fig.1;

Figur 3    eine schematische Darstellung eines Strömungsgeschwindigkeitsprofils, wie es mit einer Anordnung nach den Figuren 1 und 2 ermittelt werden kann;

Figur 4    eine schematische Darstellung einer Vorrichtung gemäß einer Ausführungsform der Erfindung;

Figur 5    eine schematische Darstellung der Funktionsweise der Vorrichtung aus Fig. 4;

Figur 6    eine schematische Darstellung der örtlichen Verteilung der Partikelkonzentration, wie sie mit dem erfindungsgemäßen Verfahren ermittelt werden kann;

Figur 7    eine schematische Darstellung des zeitlichen Verlaufs eines ersten Anregungssignals für einen Ultraschall-Wandler und der Schwingungsantwort des Wandlers auf dieses Signal;

Figur 8    eine schematische Darstellung des zeitlichen Verlaufs eines zweiten Anregungssignals für einen Ultraschall-Wandler und der Schwingungsantwort des Wandlers auf dieses Signal;

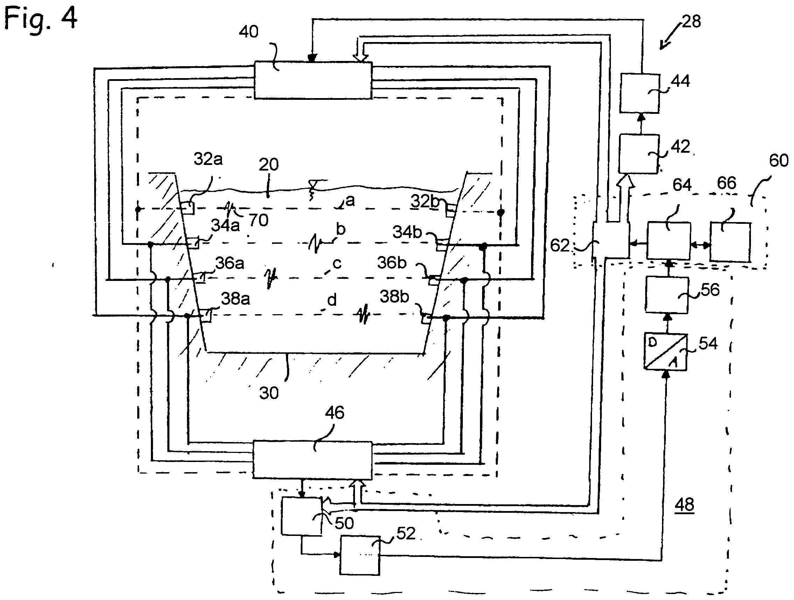

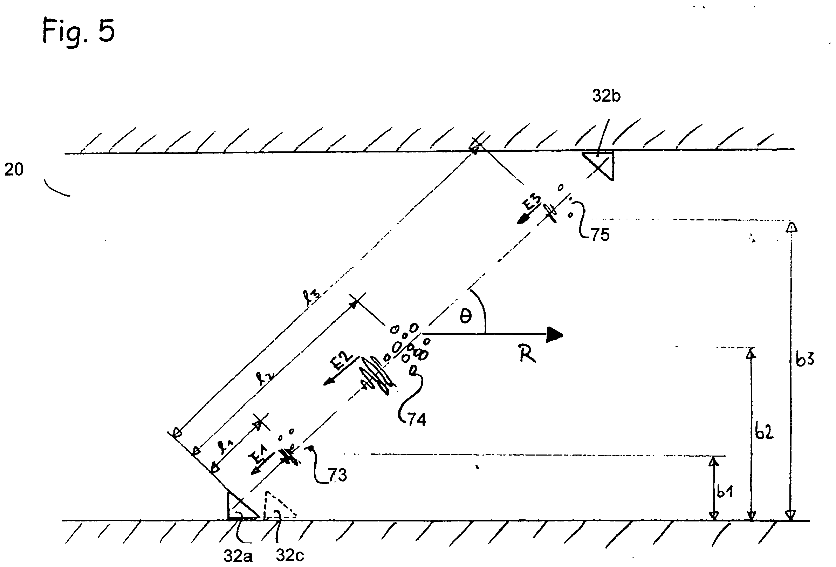

Eine Ausführungsform einer erfindungsgemäßen Vorrichtung 28 ist in Figur 4 dargestellt. Mehrere Ultraschall-Wandler 32a, 32b, 34a, 34b, 36a, 36b, 38a, 38b sind in dem zu messenden Querschnitt eines offenen Gerinnes 30 paarweise installiert, so daß sich jeweils zwischen den Mitgliedern eines Paares 32a und 32b, 34a und 34b, 36a und 36b, 38a und 38b Pfade a, b, c, d erstrecken, die den Querschnitt des Gerinnes 30 in verschiedenen Tiefen von einer Seitenwand zur anderen durchqueren. Dabei schließen die Pfade a, b, c, d mit der Strömungsrichtung R des Fluids 20 einen Winkel $\theta$ ein (siehe auch Figur 5) wodurch die Pfade in einer Richtung mit der Strömung und in entgegengesetzter Richtung gegen die Strömung des Fluids 20 durchlaufen werden können. Die Ultraschall-Wandler 32a, 32b, 34a, 34b, 36a, 36b, 38a, 38b sind über einen Sendemultiplexer 40 mit einem Signalgenerator 42 mit Verstärker 44 und über einen Empfangsmultiplexer 46 mit einer Signalverarbeitungseinheit 48 verbunden, sodass jeder der Ultraschall-Wandler 32a, 32b, 34a, 34b, 36a, 36b, 38a, 38b wahlweise als Sender oder Empfänger geschaltet werden kann. Die Signalverarbeitungseinheit 48 besteht aus einem Filter 50 einem Verstärker 52 einem Analog/Digitalwandler 54, in dem die gefilterten und verstärkten Signale von den Ultraschall-Wandlern digitalisiert werden, und einem Speicher 56, in dem die digitalisierten Signale schließlich für die weitere Analyse gespeichert werden.

Eine Steuer- und Auswerteeinheit 60 enthält eine schnelle Ablaufsteuerung 62, welche den Signalgenerator 42, den Sendemultiplexer 40 und den Empfangsmultiplexer 46 steuert, eine Recheneinheit mit Prozessor 64, zur Analyse der im Speicher 56 abgelegten Signale, und eine Bedien- und Beobachtungseinheit 66 zur Bedienung der Messvorrichtung 28 und zur Datenausgabe.

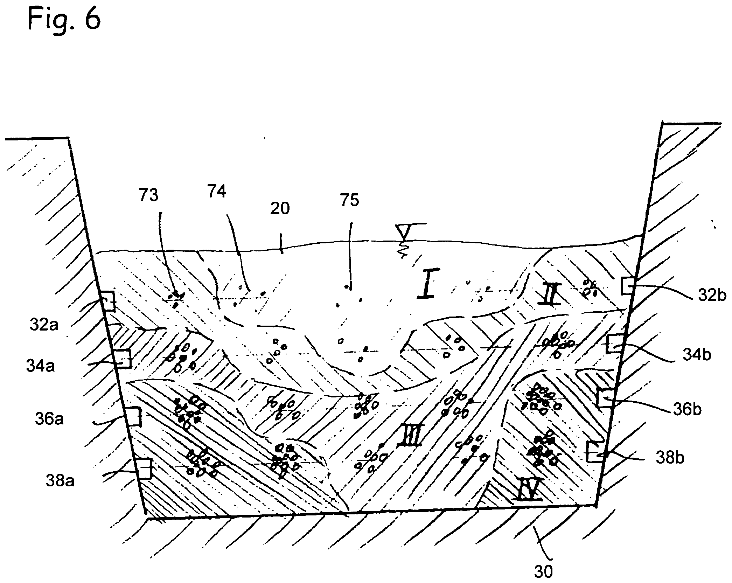

Für die Messung der Strömungsgeschwindigkeit des Fluids 20, z.B. zur Bestimmung der Durchflussmenge, wird in bekannter Weise jeweils ein Ultraschall-Wandler der 32a und 32b, 34a und 34b, 36a und 36b, 38a und 38b als Sender geschaltet, der jeweils andere als Empfänger. Um ein Übersprechen zwischen den verschiedenen Pfaden a bis d zu vermeiden wird vorzugsweise nur jeweils einer der Ultraschall-Wandler gleichzeitig als Sender geschaltet. Ist beispielsweise der Ultraschall-Wandler 32a als Sender geschaltet, wird er durch ein kurzes elektrisches Signal, wie es beispielhaft in Fig. 6 dargestellt ist, vom Signalgenerator 42 angeregt und sendet ein Ultraschallsignal 70 aus, welches sich entlang des Pfades a zum Empfänger 32b ausbreitet und dort registriert wird, sodass die Laufzeit $t_1$ des Signals ermittelt werden kann. Anschließend wird der Ultraschall-Wandler 32b als Sender geschaltet, und ein Ultraschallsignal 70 in entgegengesetzter Richtung über den Pfad a gesendet, welches eine Laufzeit $t_2$ benötigt. Aus der Differenz der Laufzeiten $t_1$ und $t_2$ läßt sich in bekannter Weise die Strömungsgeschwindigkeit des Fluids berechnen.

Das Ultraschallsignal 70 wird jedoch auch an den im Fluid 20 enthaltenen Partikeln 73, 74, 75 reflektiert. Die reflektierten Ultraschallsignale E1, E2, E3 sind durch die Eigenbewegung der Partikel 73, 74, 75 in Ihrer Frequenz verschoben (Doppler-Effekt). Um die Reflexionen E1, E2, E3 des Ultraschallsignals 70 auswerten zu können um damit die Konzentration der Partikel 73, 74, 75 im Meßquerschnitt zu berechnen, wird der als Sender geschaltete Ultraschall-Wandler 32a bzw. 32b unmittelbar nach dem Senden der Ultraschallsignale 70 als Empfänger geschaltet. Damit kann er die Reflexionen E1, E2, E3 empfangen und zur Auswertung über den Empfangsmultiplexer 46 an die Signalverarbeitungseinheit 48 weiterleiten.

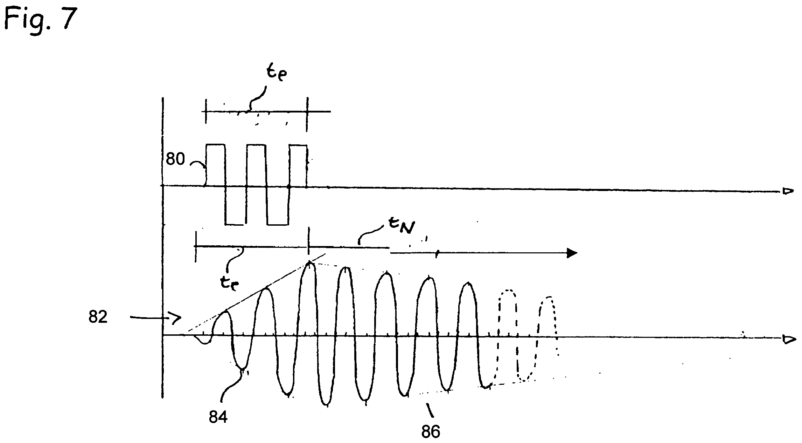

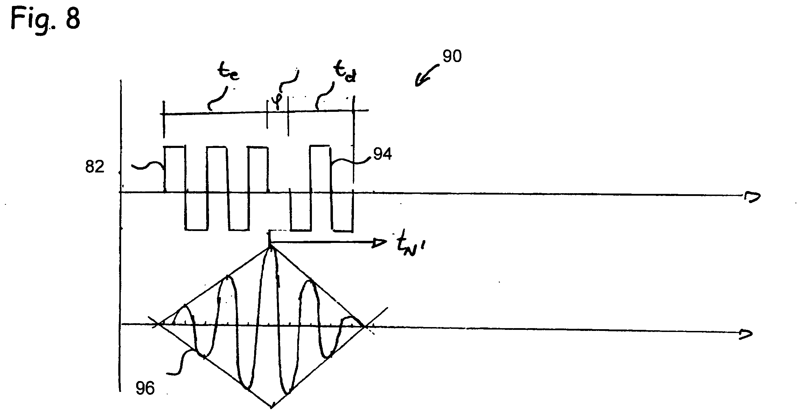

Soll derselbe Ultraschall-Wandler kurz nach dem Senden wieder als Empfänger arbeiten, muß die Eigenschwingung des Ultraschall-Wandlers schnell gedämpft werden. Es ist bekannt, daß Ultraschall-Wandler eine Nachschwingzeit $t_N$ besitzen. Damit schnell wieder empfangen werden kann, ist eine kurze Nachschwingzeit $t_N$' wünschenswert. Wird, wie in Fig. 7 dargestellt, der Ultraschall-Wandler durch ein einfaches Pulssignal 80 der Länge $t_e$ angeregt, so verhält sich die Eigenschwingung des Ultraschall-Wandlers ähnlich der dargestellten Kurve 82. Auf eine Einschwingphase 84 folgt eine Nachschwingphase 86 mit einer langen Nachschwingzeit $t_N$. Eine lange Nachschwingzeit $t_N$ kann zum einen durch eine konstruktiven Gestaltung des Ultraschall-Wandlers vermieden werden. Die Nachschwingzeit $t_N$ lässt sich aber auch durch eine sinnvolle Gestaltung des Sendesignals vom Signalgenerator 42 deutlich verkürzen. In Fig. 8 ist ein Sendesignal 90 dargestellt, bei dem nach einem Anregungsteil 92 der Länge $t_e$ eine Phasenverschiebung φ eingefügt wird, nach der ein Dämpfungsteil 94 der Länge $t_d$ folgt. Wird die Phasenverschiebung φ so gewählt, dass der Dämpfungsteil 94 den Schwingungen 96 des Ultraschall-Wandlers entgegenwirkt, so läßt sich eine deutlich verkürzte Nachschwingzeit $t_N$' erreichen. Der Ultraschall-Wandler kann somit wesentlich schneller als Empfänger verwendet werden.

Nach der Digitalisierung der reflektierten Signale im A/D-Wandler 54, kann durch eine Amplitudenanalyse die Partikelkonzentration ermittelt werden. Durch eine zeitliche Diskretisierung der reflektierten Signale E1, E2, E3 läßt sich die Entfernung der Reflexionsquellen 73, 74, 75, vom Empfänger, in Fig. 5 Ultraschall-Wandler 32a, bestimmen. Hierzu muss zuerst die Schallgeschwindigkeit $v_s$ des Mediums ermittelt werden. Diese ergibt sich nach Fig. 1 aus der Pfadlänge 1 dividiert durch die mittlere Laufzeit 0,5 $(t_1+t_2)$. Die Entfernung l(t) der Partikel, an denen die Reflexion E(t) entstand, ergibt sich dann aus

$$l(t) = 0,5\frac{vS}{t}$$

Durch Erfassung der Reflexionen E1, E2, E3 auf mehreren Pfaden a bis d, lassen sich sowohl örtlich aufgelöste Partikeldichten darstellen (Fig. 6) als auch durch geeignete Algorithmen genaue Mittelwerte aus dem gesamten Meßquerschnitt ermitteln.

Der Anwender hat durch das beschriebene Verfahren eine wesentlich höhere Auflösung seines Meßquerschnittes und damit eine höhere Genauigkeit der Messergebnisse als bei der punktuellen Messung der Partikeldichte nach dem Stand der Technik.

Besonders vorteilhaft ist es, wenn die Erfassung der Reflexionen zu Messung der Partikelkonzentration mit den vorhandenen Ultraschall-Wandlern durchgeführt wird. Dann ist weder zusätzlicher Einbauaufwand notwendig, noch fallen weitere Gerätekosten an.

Vor der Digitalisierung im A/D-Wandler 54 werden die erfaßten Reflexionen in einem Filter 50 gefiltert. Der Filter 50 ist so ausgelegt, dass nur die dopplerverschobenen Reflexionen ungedämpft bleiben. Die Filterparameter sind vorzugsweise von der Ablaufsteuerung 62 veränderbar. Dadurch kann der Durchlassbereich des Filters 50 in Abhängigkeit von der gemessenen Strömungsgeschwindigkeit des Fluids 20 an die zu erwartende Dopplerverschiebung der Reflexionen angepasst werden.

Vorteilhafterweise können nicht nur die Reflexionen auf dem Pfad, auf dem gesendet wurde, erfasst werden. Es können auch Reflexionen und insbesondere Streusignale mittels der auf den anderen Pfaden angeordneten Empfänger erfaßt und zur Auswertung herangezogen werden. Auf diese Weise können die Quellen der Reflexionen und Streusignale örtlich detaillierter aufgelöst und damit die Konzentrationsverteilung der Partikel genauer ermittelt werden.

Gemäß einer weiteren Ausführungsform der Erfindung können zusätzlich zu den für die Ultraschall-Laufzeit-Mengenmessung vorgesehenen Ultraschall-Wandlern 32a, 32b, 34a, 34b, 36a, 36b, 38a, 38b weitere, separate Ultraschall-Wandler 32c (Fig. 5) zur Erfassung der Reflexionen E1, E2, E3. vorgesehen sein. Die Reflexionen E1, E2, E3 können dann entweder zusätzlich mit diesen separaten Ultraschall-Wandler 32c erfasst werden, so daß eine höhere Ortsauflösung der Partikelkonzentration möglich ist. Bei geeigneter Anordnung der Empfänger ist auch eine räumliche Auflösung der Partikelkonzentration möglich.

Oder es werden anstelle der Wandler 32a, 32b, 34a, 34b, 36a, 36b, 38a, 38b nur die separaten Ultraschall-Wandler zur Erfassung der Reflexionen verwendet. Dies bietet die Möglichkeit speziell ausgebildete Wandler einzusetzen, die besonders an ihre Aufgabe, das Empfangen, angepasst sind. Die Ultraschall-Wandler 32a, 32b, 34a, 34b, 36a, 36b, 38a, 38b für die Laufzeit-Mengenmessung, die als Sender arbeiten sollen, besitzen nämlich in der Regel einen geringen Abstrahlwinkel, damit das Signal gerichtet abgegeben wird, und damit auch meist einen kleinen Empfangswinkel. Dagegen ist es für die Erfassung der gestreuten Signale vorteilhaft, wenn die Empfänger einen großen Empfangswinkel aufweisen.

**Patentansprüche**

1.  Verfahren zur Ultraschall-Laufzeit-Mengenmessung eines strömenden Fluids, bei dem die Laufzeit eines Ultraschall-Signals (70) entgegen und mit der Strömung (R) gemessen und daraus die Strömungsgeschwindigkeit des Fluids ermittelt wird, wobei zusätzlich die Reflexionen des Ultraschall-Signals (70) an Partikeln im Fluid erfasst werden, um daraus die Konzentration der Partikel zu ermitteln, dadurch gekennzeiochnet, dass zur Erzeugung des Ultraschall-Signals (70) in einem Ultraschall-Wandler (32a, 32b, 34a, 34b, 36a, 36b, 38a, 38b) ein elektrisches Sendesignal (90) verwendet wird, welches aus einem Anregungsteil (92) und einem Dämpfungsteil (94) besteht und wobei der Dämpfungsteil (94) gegenüber dem Anregungsteil (92) eine Phasenverschiebung ($\varphi$) aufweist, sodass er dem Nachschwingen des Ultraschall-Wandlers entgegenwirkt.

2. Verfahren nach Anspruch 1, bei dem die Konzentration der Partikel durch Amplitudenanalyse der Reflexionen des Ultraschall-Signals (70) ermittelt wird.

3. Verfahren nach Anspruch 1 oder 2, bei dem die örtliche Konzentrationsverteilung (73, 74, 75) der Partikel mittels Analyse der Laufzeit der Reflexionen (E1, E2, E3) des Ultraschall-Signals (70) ermittelt wird.

4. Verfahren nach einem der vorhergehenden Ansprüche, bei dem mittels Analyse der Laufzeit von mehreren Ultraschall-Signalen entlang mehrerer Pfade ein Strömungsgeschwindigkeitsprofil ermittelt wird und die örtliche Konzentrationsverteilung der Partikel durch Auswertung der Reflexionen der mehreren Ultraschall-Signale ermittelt wird.

5. Verfahren nach einem der vorhergehenden Ansprüche, bei dem die erfassten Reflexionen (E1, E2, E3) vor der Auswertung schmalbandig gefiltert werden.

## Claims

1. A method for the ultrasonic measurement of the running time and quantity of a flowing fluid, in which the running time of an ultrasonic signal (70) counter to and in the direction of the flow (R) is measured and the flow rate of the fluid is determined therefrom, wherein the reflections of the ultrasonic signal (70) on particles in the fluid are also detected in order to determine the concentration of the particles therefrom, **characterized in that** for generating the ultrasonic signal (70) in an ultrasonic transducer (32a, 32b, 34a, 34b, 36a, 36b, 38a, 38b), use is made of an electric transmission signal (90), which consists of an excitation part (92) and a damping part (94) and wherein the damping part (94) has a phase shift ($\varphi$) relative to the excitation part (92) so that it counteracts the post-oscillation of the ultrasonic transducer.

2. The method according to Claim 1, in which the concentration of the particles is determined by amplitude analysis of the reflections of the ultrasonic signal (70).

3. The method according to Claim 1 or 2, in which the local concentration distribution (73, 74, 75) of the particles is determined by analysis of the running time of the reflections (E1, E2, E3) of the ultrasonic signal (70).

4. The method according to any one of the preceding claims, in which a flow rate profile is determined by analysis of the running time of a plurality of ultrasonic signals along a plurality of paths and the local concentration distribution of the particles is determined by evaluation of the reflections of the plurality of ultrasonic signals.

5. The method according to any one of the preceding claims, in which the detected reflections (E1, E2, E3) are narrow-band filtered prior to evaluation.

## Revendications

1. Procédé de mesure de débit par la durée de transit d'ultrasons d'un fluide s'écoulant, pour lequel la durée de transit d'un signal ultrasonore (70) est mesurée dans le sens opposé à l'écoulement (R) et dans le sens de celui-ci et la vitesse d'écoulement du fluide est déterminée à partir de cela, les réflexions du signal ultrasonore (70) étant en plus saisies sur des particules dans le fluide pour déterminer à partir de celles-ci la concentration des particules, **caractérisé en ce que** pour produire le signal ultrasonore (70) dans un transducteur à ultrasons (32a, 32b, 34a, 34b, 36a, 36b, 38a, 38b), on utilise un signal d'émission électrique (90) lequel est composé d'une partie excitation (92) et d'une partie amortissement (94) et la partie amortissement (94) comportant un déphasage ($\varphi$) par rapport à la partie excitation (92) de telle sorte qu'elle s'oppose à la postoscillation du transducteur à ultrasons.

2. Procédé selon la revendication 1, pour lequel la concentration de particules est déterminée par l'analyse d'amplitude des réflexions du signal ultrasonore (70).

3. Procédé selon la revendication 1 ou 2, pour lequel la répartition locale de concentration (73, 74, 75) des particules est déterminée au moyen de l'analyse de la durée de transit des réflexions (E1, E2, E3) du signal ultrasonore (70).

4. Procédé selon l'une quelconque des revendications précédentes, pour lequel un profil de vitesse d'écoulement est déterminé au moyen de l'analyse de la durée de transit de plusieurs signaux ultrasonores le long de plusieurs trajectoires et la répartition de concentration locale des particules est déterminée par exploitation des réflexions de plusieurs signaux ultrasonores.

5. Procédé selon l'une quelconque des revendications précédentes, pour lequel les réflexions saisies (E1, E2, E3) sont filtrées en bande étroite avant l'exploitation.

Fig. 1        Stand der Technik

EP 1 554 548 B1

Fig. 2

Stand der Technik

Fig. 3      Stand der Technik

Fig. 4

Fig. 5

EP 1 554 548 B1

Fig. 6

Fig. 7

Fig. 8

**EP 1 554 548 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19740549 A1
- JP 2000321104 A
- US 3731532 A
- GB 2156075 A
- US 5125514 A
- US 3575050 A
- US 5533408 A